# FASCICULE DE BREVET EUROPEEN

(11) **EP 4 079 012 B1**
(45) Date de publication et mention de la délivrance du brevet: **09.09.2026**
(21) Numéro de dépôt: 20848844.5
(22) Date de dépôt: 17.12.2020
(51) Int. Cl.: H04W 8/18, H04W 8/20

(54) **TECHNIQUE D'ADMINISTRATION D'UN PROFIL D'ACCES A UN RESEAU DE COMMUNICATION**
VERFAHREN ZUM VERWALTEN EINES PROFILS FÜR DEN ZUGANG ZU EINEM KOMMUNIKATIONSNETZ
METHOD FOR ADMINISTERING A PROFILE FOR ACCESS TO A COMMUNICATION NETWORK

(30) Priorité: 20.12.2019 FR 1915342
(43) Date de publication de la demande: 26.10.2022
(73) Titulaire: Orange, 92130 Issy-les-Moulineaux (FR)
(72) Inventeur: GAMISHEV, Todor, 92326 CHÂTILLON CEDEX (FR); COUREAU, Laurent, 92326 CHATILLON (FR)
(86) Numéro de dépôt international: PCT/FR2020/052487
(87) Numéro de publication internationale: WO 2021/123629

(56) Documents cités:
- EP-A1- 3 073 770
- US-A1- 2009 191 857
- US-A1- 2014 359 295

## Description

L'invention se rapporte au domaine général des télécommunications.

L'invention concerne plus particulièrement une technique d'administration d'un profil d'accès à un réseau de communication par un module de sécurité et par une entité d'administration.

La technique d'administration se situe dans le domaine des terminaux de communication mobile, et plus particulièrement des cartes eUICC dites embarquées (de l'anglais *« embedded Universal Integrated Circuit Card* »)*.* Une carte eUICC embarquée permet de gérer à distance un abonnement auprès d'un opérateur afin de permettre à un dispositif mobile d'accéder à un réseau de communication mobile. Cette carte eUICC peut être non amovible.

L'association GSMA (pour *« Global System for Mobile Communications »)* développe des spécifications techniques pour une carte de type « eUICC » jouant le rôle d'un module de sécurité, prévue pour être embarquée dans un dispositif utilisateur mobile. Un tel module de sécurité peut être inamovible et il est alors nécessaire d'effectuer des actions à distance, par exemple y télécharger un profil d'accès au réseau d'un opérateur ou bien encore gérer ce profil. Dans le cadre des services M2M *(« Machine To Machine* »), de machine à machine, la spécification technique de la GSMA « SGP.02 - Remote Provisioning Architecture for Embedded UICC Technical Specification » Version 4.0 datée du 25 février 2019 spécifie une gestion de configuration à distance d'une carte eUICC (ou module de sécurité). Dans cette architecture, une entité SM-DP (pour *« Subscription Manager- Data Preparation »)* est configurée pour préparer un profil d'accès au réseau pour un module de sécurité eUICC et une entité SM-SR (pour *« Subscription Manager-Secure Routing »)* contrôle l'accès au module eUICC pour permettre l'installation du profil d'accès par l'entité SM-DP. En complément de cette fonction de contrôle d'accès, l'entité SM-SR est ensuite en charge d'administrer le profil après son installation par des actions telles que : activer le profil *(« enable »),* désactiver le profil *(« disable »)* ou bien encore supprimer le profil *(« delete »).* Cette entité SM-SR est le point d'entrée du fournisseur de service M2M (noté M2M-SP pour « *M2M Service Provider »)* pour accéder au module eUICC. On constate que dans cette architecture l'entité SM-SR est un point de contrôle dans l'interface de l'opérateur de réseau avec le module eUICC et dans l'interface avec le fournisseur de services M2M. Ainsi il est extrêmement complexe pour le fournisseur de service M2M de modifier son prestataire pour l'entité SM-SR.

La demande de brevet EP3073770A1 décrit un procédé de sécurisation d'un échange entre un module eUICC et une entité SM-SR, pour l'établissement d'un canal de transmission sécurisé entre ces entités.

La demande de brevet US 2009/191857 concerne la fourniture à distance de paramètres d'identification d'un souscripteur de service dans un terminal, comprenant l'établissement d'une connexion sécurisée dans un réseau de communication.

La demande de brevet US 2014/359295 décrit un procédé de contrôle de transfert sur un module de sécurité, entre une première entité et une deuxième entité.

Un des buts de l'invention est de remédier à des insuffisances/inconvénients de l'état de la technique et/ou d'y apporter des améliorations.

Selon un premier aspect, l'invention a pour objet un procédé d'administration d'un profil d'accès à un réseau de communication par un module de sécurité. Ce procédé comprend :
- réception d'une demande d'exécution d'une action d'administration relative à un profil d'accès en provenance d'une entité d'administration, ladite demande comprenant un certificat de ladite entité ;
- envoi d'une autorisation pour exécuter l'action en coopération avec l'entité d'administration lorsqu'il est vérifié que le certificat reçu est légitime et qu'il porte une information indiquant que ladite entité est autorisée à demander l'exécution de ladite action ;
- envoi d'un rejet de la demande d'exécution dans le cas contraire.

De manière correspondante, l'invention a également pour objet un procédé d'administration d'un profil d'accès à un réseau de communication par une entité d'administration. Ce procédé comprend :
- envoi à destination d'un module de sécurité d'une demande d'exécution d'une action d'administration relative à un profil d'accès, ladite demande comprenant un certificat de ladite entité, ledit certificat portant une information indiquant que ladite entité est autorisée à demander l'exécution de ladite action ;
- réception d'une autorisation pour exécuter l'action en coopération avec le module de sécurité, lorsqu'il est vérifié par le module de sécurité que le certificat est légitime et qu'il porte ladite information.

L'invention tire son origine d'inconvénients relevés lors de la mise en œuvre de l'architecture M2M En marge de cette architecture M2M, la GSMA a prévu une architecture différente pour le B2C *(« Business to Consumer »)* qui n'est pas interopérable avec celle du M2M. La technique proposée permet de faire converger ces deux architectures. La spécification technique de la GSMA « SGP.22 - Remote Sim Provisioning (RSP) Architecture for consumer Devices » v.2.2.1 datée du 18 décembre 2018 spécifie une gestion de configuration à distance d'un module de sécurité embarqué dans un dispositif directement contrôlé par l'utilisateur final du dispositif. Il est prévu qu'un utilisateur ou client puisse s'abonner directement via une interface homme-machine de son dispositif utilisateur, ou en se rendant dans une boutique de l'opérateur ou/et qu'il installe un profil d'accès au réseau. Il est également prévu qu'il puisse changer d'opérateur de la même façon. A cet effet, la GSMA a prévu une architecture dans laquelle le dispositif utilisateur obtient le profil d'accès d'un serveur chargé de la préparation des données de gestion de souscription SM-DP+ (pour *« Subscription Manager Data Preparation+* ») afin de télécharger un profil d'accès qui a été préparé pour lui. L'utilisateur peut ensuite interagir avec son dispositif utilisateur afin d'effectuer les opérations d'administration de son profil d'accès. Une telle architecture ne peut pas être utilisée pour effectuer les opérations d'administration du profil d'accès dans des cas d'usage M2M.

La technique proposée permet ainsi en modifiant l'architecture B2C prévue par la GSMA de prendre en charge les cas d'usage M2M. Grâce à la technique proposée, le fournisseur de service M2M peut simplement définir l'entité en charge d'une action d'administration, telle que l'activation, la désactivation et la suppression du profil d'accès. Le fournisseur de service M2M peut également modifier ensuite cette entité d'administration. L'entité en charge du téléchargement du profil d'accès est gérée par l'opérateur du réseau de communication auquel le profil d'accès est associé. Dans les cas d'usage M2M, il n'est plus nécessaire pour télécharger le profil d'accès de communiquer avec le module de sécurité par l'intermédiaire du serveur SM-SR.

La technique proposée permet ainsi de séparer les rôles entre des entités d'administration distinctes en fonction de leur interaction avec soit l'opérateur, soit le fournisseur de service M2M.

Le module de sécurité vérifie ainsi si l'entité d'administration qui demande à exécuter une action d'administration dispose bien des droits associés à un rôle qui lui a été attribué. Dans l'architecture M2M, seul le serveur SM-SR dispose d'un droit lui permettant d'établir un lien sécurisé avec le module de sécurité. La technique proposée autorise d'autres entités d'administration à demander l'exécution d'une action d'administration en fonction du rôle qui est porté par le certificat associé à l'entité. La demande d'exécution d'une action d'administration peut correspondre à une demande d'autorisation pour exécuter l'action ou bien peut porter implicitement une demande d'autorisation pour exécuter l'action.

Un profil d'accès correspond à un ensemble de données et d'applications qui permettent au terminal mobile, une fois le profil activé, d'accéder au réseau d'un opérateur.

Deux types d'entités d'administration peuvent être définies :
- un premier type d'entité d'administration associé au téléchargement du profil d'accès dans le module de sécurité. Ce premier type d'entité est typiquement sous contrôle de l'opérateur du réseau ;
- une deuxième type d'entité d'administration associé à la gestion du profil d'accès une fois téléchargé. Ce deuxième type d'entité est typiquement sous contrôle du fournisseur de service M2M.

Il est ainsi possible de définir différentes entités d'administration, un rôle étant attribué à chacune d'entre elles.

Les différents modes ou caractéristiques de réalisation mentionnés ci-après peuvent être ajoutés indépendamment ou en combinaison les uns avec les autres, au procédé d'administration d'un profil d'accès que défini précédemment.

Dans un mode de réalisation particulier, le certificat comprend un champ indiquant une autorisation pour l'exécution de ladite action.

Ceci permet au module de sécurité de vérifier directement à partir de ce champ que l'entité d'administration dispose bien des droits requis pour demander une exécution de l'action. Le certificat est signé par la clé secrète d'une entité maître et est vérifié au moyen de la clé publique associée à cette entité maître. Le module de sécurité est par exemple initialisé en usine avec cette clé publique. Ce mode de réalisation reste très simple à mettre en œuvre. L'entité maître est l'entité qui certifie les rôles attribués aux entités d'administration.

Dans un mode de réalisation particulier, le certificat est signé par une clé secrète d'un certificat associé à ladite action indiquant une autorisation pour l'exécution de ladite action.

Ceci permet au module de sécurité de vérifier en fonction d'une clé publique associée au rôle nécessaire à l'exécution de l'action d'administration que l'entité d'administration dispose bien des droits requis. Le module de sécurité est par exemple initialisé en usine avec une ou plusieurs clés publiques, chacune étant associée à un rôle. L'entité maître est l'entité qui certifie les rôles attribués aux entités d'administration.

Dans un mode de réalisation particulier, ladite action appartient au groupe comprenant au moins un téléchargement d'un profil d'accès, une activation d'un profil d'accès, une désactivation d'un profil d'accès, une suppression d'un profil d'accès.

Il est ainsi possible de définir différentes entités d'administration, en fonction des rôles définis.

Selon un deuxième aspect, l'invention concerne un module de sécurité, configuré pour mémoriser d'un profil d'accès à un réseau de communication. Ce module comprend :
- un module de gestion de profil, configuré pour recevoir une demande d'exécution d'une action d'administration relative à un profil d'accès en provenance d'une entité d'administration, ladite demande comprenant un certificat de ladite entité, pour autoriser l'exécution de l'action en coopération avec l'entité d'administration lorsqu'il est vérifié que le certificat reçu est légitime et qu'il porte une information indiquant que ladite entité est autorisée à demander l'exécution de ladite action, et pour rejeter la demande dans le cas contraire.

Les avantages énoncés pour le procédé d'administration selon le premier aspect sont transposables directement à un module de sécurité.

Ce module de sécurité peut bien entendu comporter en termes structurels les différentes caractéristiques relatives au procédé d'administration tel que décrit précédemment, qui peuvent être combinées ou prises isolément.

Selon un troisième aspect, l'invention concerne une entité d'administration d'un profil d'accès à un réseau de communication, ladite entité comprenant un module de contrôle configuré pour envoyer à destination d'un module de sécurité une demande d'exécution d'une action d'administration relative à un profil d'accès, ladite demande comprenant un certificat de ladite entité, ledit certificat portant une information indiquant que ladite entité est autorisée à demander l'exécution de ladite action et pour recevoir une autorisation pour exécuter l'action en coopération avec le module de sécurité, lorsqu'il est vérifié par le module de sécurité que le certificat est légitime et qu'il porte ladite information.

Les avantages énoncés pour le procédé d'administration selon le premier aspect sont transposables directement à une entité d'administration.

Cette entité d'administration peut bien entendu comporter en termes structurels les différentes caractéristiques relatives au procédé d'administration tel que décrit précédemment, qui peuvent être combinées ou prises isolément.

Selon un quatrième aspect, l'invention concerne un système d'administration d'un profil d'accès à un réseau de communication, ledit système comprenant une entité d'administration selon le troisième aspect et une entité maître, configurée pour signer un certificat de l'entité d'administration, ledit certificat portant une information indiquant que ladite entité est autorisée à demander l'exécution de ladite action.

Les avantages énoncés pour le procédé d'administration selon le premier aspect sont transposables directement à un système d'administration.

Le système d'administration peut bien entendu comporter en termes structurels les différentes caractéristiques relatives au procédé d'administration tel que décrit précédemment, qui peuvent être combinées ou prises isolément.

Selon un cinquième aspect, l'invention concerne un programme pour un module de sécurité, comprenant des instructions de code de programme destinées à commander l'exécution des étapes du procédé d'administration d'un profil d'accès précédemment décrit mises en œuvre par un module de sécurité, lorsque ce programme est exécuté par ce module de sécurité et un support d'enregistrement lisible par un module de sécurité sur lequel est enregistré un programme pour un module de sécurité.

Les avantages énoncés pour le procédé d'administration d'un profil d'accès selon le premier aspect sont transposables directement au programme pour un module de sécurité et au support d'enregistrement.

Selon un sixième aspect, l'invention concerne un programme pour une entité d'administration, comprenant des instructions de code de programme destinées à commander l'exécution des étapes du procédé d'administration d'un profil d'accès précédemment décrit mises en œuvre par une entité d'administration, lorsque ce programme est exécuté par cette entité d'administration et un support d'enregistrement lisible par une entité d'administration sur lequel est enregistré un programme pour une entité d'administration.

Les avantages énoncés pour le procédé d'administration selon le premier aspect sont transposables directement au programme pour une entité d'administration et au support d'enregistrement.

La technique d'administration d'un profil d'accès sera mieux comprise à l'aide de la description suivante de modes de réalisation particuliers, en référence aux dessins annexés sur lesquels :
- la figure 1 représente un système dans lequel est mis en œuvre le procédé d'administration d'un profil d'accès dans un mode de réalisation particulier ;
- la figure 2A illustre des étapes d'un procédé d'administration d'un profil d'accès mis en œuvre par un module de sécurité selon un mode de réalisation particulier ;
- la figure 2B illustre des étapes du procédé d'administration d'un profil d'accès mis en œuvre par une entité d'administration selon un mode de réalisation particulier ;
- la figure 3A représente une arborescence de certificats dans un premier mode de réalisation particulier ;
- la figure 3B représente une arborescence de certificats dans un deuxième mode de réalisation particulier ;
- la figure 4A représente un module de sécurité dans un mode de réalisation particulier ;
- la figure 4B représente une entité d'administration dans un mode de réalisation particulier.

Dans la suite de la description, on présente des exemples de plusieurs modes de réalisation s'appliquant à un module de sécurité de type carte eUICC tel qu'en cours de normalisation dans le cadre de l'association GSMA, mais le procédé d'administration d'un profil d'accès s'applique également à d'autres types de module de sécurité. Plus généralement, le module de sécurité est une plateforme dédiée inviolable, comprenant du matériel et du logiciel, apte à héberger de manière sécurisée des applications et leurs données confidentielles et cryptographiques et fournissant un environnement d'exécution d'applications sécurisé, par exemple une carte de type UICC.

La description qui suit se place dans le contexte des spécifications techniques, telles que définies par l'association GSMA. Plus précisément, l'architecture de la gestion de configuration à distance est définie dans la spécification technique « SGP.21 RSP Architecture », version 2.2, datée du 1 septembre 2017 et les procédures sont définies dans la spécification technique GSMA « SGP.22 - Remote Sim Provisioning (RSP) Architecture for consumer Devices » v.2.2.1 datée du 18 décembre 2018.

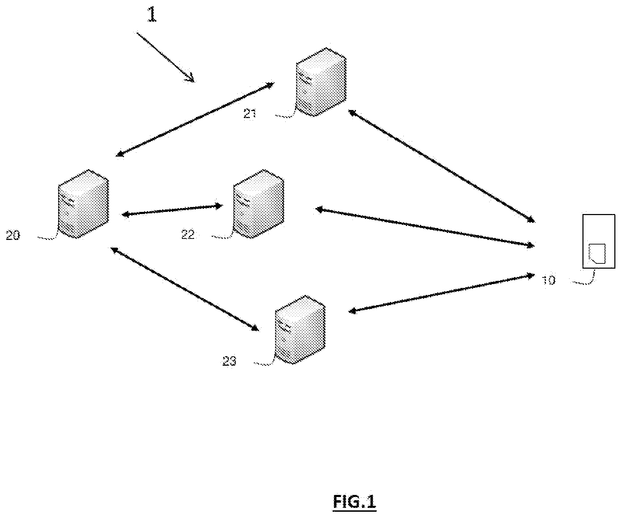

La **figure 1** représente un environnement dans lequel est mis en œuvre le procédé d'administration d'un profil d'accès dans un mode de réalisation particulier.

Un dispositif utilisateur (non représenté sur la figure 1), auquel un module de sécurité 10 est associé, est configuré pour accéder au réseau d'un opérateur mobile au moyen d'un profil d'accès au réseau généré par cet opérateur pour ce module de sécurité. Un profil d'accès correspond à un ensemble de données et d'applications qui permettent au terminal mobile, une fois le profil activé, d'accéder au réseau d'un opérateur. Le dispositif utilisateur en association avec le module de sécurité forment un terminal mobile. Plus précisément, le profil d'accès est généré pour ce module de sécurité par un serveur de gestion de données de souscription, non représenté sur la figure 1, lié à l'opérateur. Le profil d'accès comprend une application d'accès au réseau et des données d'accès associées (on parle de « credentials » en anglais), telles que des clés cryptographiques et des algorithmes. Le profil d'accès permet notamment d'authentifier le terminal mobile, plus précisément le module de sécurité 10 lors d'un accès au réseau de l'opérateur.

Le module de sécurité 10 est typiquement une carte de type « eUICC » (de l'anglais *« embedded Universal Integrated Circuit Card »),* également appelée « eSIM » (de l'anglais *« embedded Subscriber Identity Module »),* ou carte SIM inamovible. Aucune limitation n'est attachée à ce type de carte. Dans un mode de réalisation particulier, le module de sécurité 10 est une carte à puce avec un système d'exploitation offrant les fonctionnalités d'une carte de type eUICC. Dans un autre mode de réalisation particulier, le module de sécurité 10 est intégré dans le terminal formant ainsi une seule entité. Un seul module de sécurité 10 est représenté à la figure 1. Il est bien entendu qu'il s'agit uniquement d'un exemple illustratif.

Quatre entités d'administration sont représentées sur la figure 1 :
- une entité maître 20, dont le rôle principal est de distribuer les rôles à des entités d'administration 21, 22, 23 ;
- une entité d'installation 21, dont le rôle principal est de télécharger un profil d'accès sur un module de sécurité ;
- une entité d'activation/désactivation 22, dont le rôle principal est d'activer ou de désactiver un profil d'accès mémorisé sur un module de sécurité ;
- une entité de suppression 22, dont le rôle principal est de supprimer un profil d'accès mémorisé sur un module de sécurité.

Ces entités d'administration sont décrites sous la forme d'entités fonctionnelles, avec une entité maître et trois entités d'administration. Un rôle est attribué par l'entité maître à chacune de ces trois entités d'administration. Aucune limitation n'est attachée à cette répartition des rôles. Plusieurs entités d'administration peuvent être regroupées au sein d'un même serveur. Une entité d'administration peut également se voir attribuer plusieurs rôles. Sur la figure 1, une seule entité d'administration est représentée par rôle à attribuer. Il est bien entendu que plusieurs entités d'administration peuvent se voir attribuer un même rôle. En particulier, un fournisseur de service M2M définit les entités d'administration qui vont gérer les modules de sécurité pour la fourniture du service M2M. Aucune limitation n'est attachée au nombre d'entités d'administration représentées sur la figure 1. Il est possible de définir autant d'entités d'administration que de rôles à jouer pour effectuer une action d'administration relative à un profil d'accès.

Dans l'architecture B2C, le serveur chargé de la préparation des données de gestion de souscription SM-DP+ (pour *« Subscription Manager Data Preparation »)* peut être choisi pour accueillir ces différentes entités d'administration fonctionnelles. Le rôle de ce serveur est de fournir par téléchargement à un module de sécurité un profil d'accès qui a été préparé pour lui. Le rôle de ce serveur est de :
- préparer des dossiers de profil *(« Profile Package* » en anglais),
- mémoriser des clés de protection de profil de manière sécurisée et des dossiers de profil protégés dans une zone mémoire et
- allouer des dossiers de profil en fonction **d'un** identifiant de module de sécurité.

Le serveur SM-DP+ lie un dossier de profil protégé à un module de sécurité et télécharge, une fois une session sécurisée de téléchargement établie, ce ou ces profils d'accès par l'intermédiaire d'une application LPA (pour *« Local Profile Assistant »).* Cette application LPA peut selon les modes de réalisation être exécutée dans le dispositif utilisateur ou dans le module de sécurité 10.

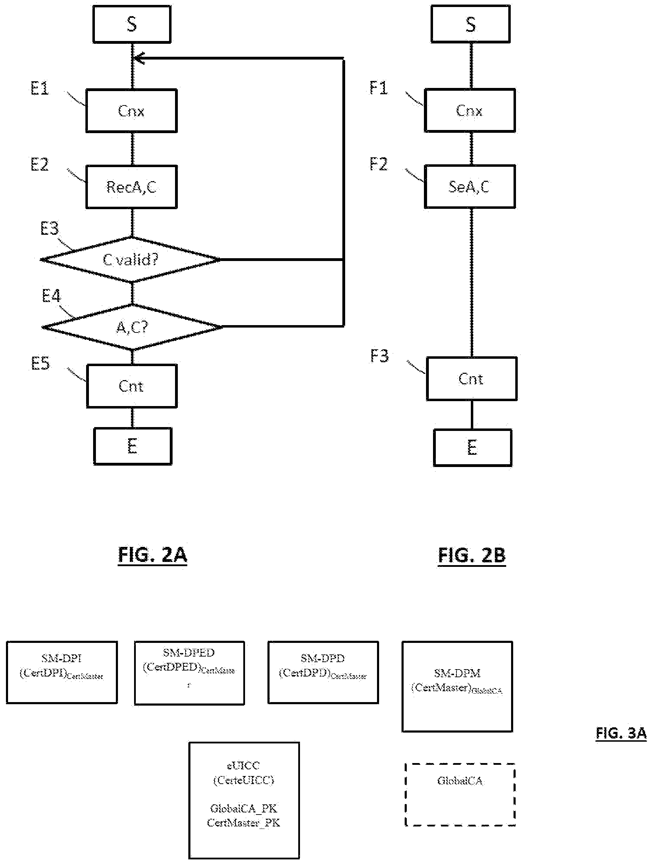

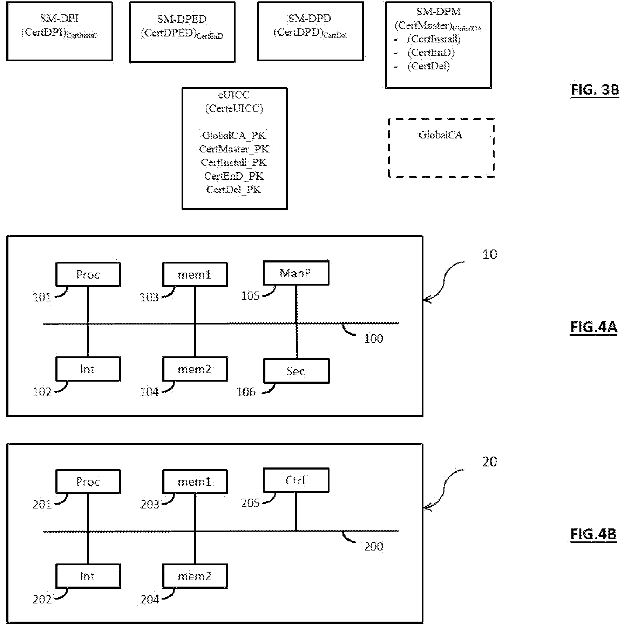

L'entité maître 20 et les entités d'administration 21-23 forment un système d'administration 1. L'arborescence de certificats va être présentée selon deux modes de réalisation en relation avec les figures 3A et 3B.

Sur ces deux figures une autorité de certification GlobalCA est représentée. Cette autorité de certification mémorise un couple de clés : une clé privée GlobalCA_SK et une clé publique GlobalCA_PK associée.

Par la suite, dans les modes de réalisation décrits, les certificats de clé publique sont de type X509. Un certificat X.509 est une carte d'identité numérique qui associe à une entité physique une clé publique certifiée. Le certificat est délivré par une autorité de certification au terme d'une procédure sécurisée. Une fois le certificat délivré, la clé publique qui est certifiée peut être utilisée par des services qui mettent en œuvre des fonctions de sécurité. Un certificat de clé publique comprend plusieurs champs, notamment :
- l'identité de l'autorité de certification émettrice du certificat,
- un algorithme de signature du certificat utilisé par l'autorité de certification pour signer le certificat,
- une période de validité du certificat,
- le nom du titulaire du certificat,
- des informations sur la clé publique : algorithme à utiliser avec la clé publique, la clé publique proprement dite,
- la signature du certificat par l'autorité de certification.
- des informations optionnelles.

L'entité maître 20 (notée SM-DPM sur les figures 3A et 3B) mémorise un couple de clés : une clé privée CertMaster_SK et une clé publique CertMaster_PK associée. Un certificat de clé publique CertMaster a été émis pour certifier la clé publique CertMaster_PK par l'autorité de certification GlobalCA. L'autorité de certification signe au moyen de sa clé privée GlobalCA_SK le certificat CertMaster de l'entité maître.

Le module de sécurité 10 mémorise un couple de clés : une clé privée EUICC_SK propre au module de sécurité et une clé publique EUICC_ PK associée. Un certificat de clé publique CerteUICC a été émis pour certifier la clé publique EUICC_ PK par l'autorité de certification GlobalCA ou par le fabricant de la carte appelé l'EUM (pour *« eUICC Manufacturer »).* Dans ce dernier cas, le certificat de l'EUM est signé par l'autorité de certification GSMA GlobalCA. Cela permet au module de sécurité 10 d'être authentifié par toutes les entités reconnaissant l'autorité de certification GlobalCA.

L'entité d'installation 21 (notée SM-DPI sur les figures 3A et 3B) mémorise un couple de clés : une clé privée CertDPI_SK et une clé publique CertDPI_PK associée.

L'entité d'activation/désactivation 22 (notée SM-DPED sur les figures 3A et 3B) mémorise un couple de clés : une clé privée CertDPED_SK et une clé publique CertDPED_PK associée. L'entité de suppression 23 (notée SM-DPD sur les figures 3A et 3B) mémorise un couple de clés : une clé privée CertDPD_SK et une clé publique CertDPD_PK associée.

Aucune limitation n'est attachée au type de certificat. Le certificat peut être en particulier d'un autre type, par exemple un certificat SSL (pour *« Secure Sockets Layer »).* La description est aisément transposable à tout type de certificat.

Un premier mode de réalisation est décrit en relation avec la **figure 3A****.** Dans ce mode de réalisation, le certificat des entités d'administration 21, 22, 23 comprend un champ indiquant une autorisation pour l'exécution d'une action d'administration de profil d'accès. Plus précisément, ce champ précise le rôle qui est attribué à l'entité d'administration à laquelle le certificat est associé. Ce rôle correspond à une autorisation d'exécuter une action d'administration. Dans le cas décrit, il s'agit d'installer un profil d'accès, d'activer ou de désactiver un profil d'accès, de supprimer d'un profil d'accès. Aucune limitation n'est attachée à cette liste d'actions d'administration.

Dans ce premier mode de réalisation, les certificats des entités d'administration sont signés par l'entité maître 20. Le certificat de l'entité d'installation 21 est noté (CertDPI)_{CertMaster}. Le certificat de l'entité d'activation/désactivation 22 est noté (CertDPED)_{CertMaster}. Le certificat de l'entité de suppression 23 est noté (CertDPD)_{CertMaster}.

Dans ce premier mode de réalisation, le module de sécurité 10 mémorise deux clés publiques : la clé publique GlobalCA_PK de l'autorité de certification GlobalCA et la clé publique CertMaster_PK de l'entité maître 20. Ces clés publiques sont configurées par exemple en usine. Dans un autre mode de réalisation, les certificats des entités d'administration sont signés par l'autorité de certification GlobalCA.

Un deuxième mode de réalisation est décrit en relation avec la **figure 3B****.** Dans ce mode de réalisation, le certificat des entités d'administration 21, 22, 23 est signé par une clé secrète d'un certificat associé à une action d'administration relative à un profil d'accès indiquant une autorisation pour l'exécution de cette action. Plus précisément, l'entité maître 20 dispose de trois certificats, chacun d'entre eux étant associé à un rôle :
- CertInstall est le certificat associé au rôle d'installation d'un profil d'accès. La clé secrète de ce certificat CertInstall est utilisée pour signer le certificat CertDPI de l'entité d'installation 21. Ce dernier est noté (CertDPI)_{CertInstall} ;
- CertEnD est le certificat associé au rôle d'activation/désactivation d'un profil d'accès. La clé secrète de ce certificat CertEnD est utilisée pour signer le certificat CertDPED de l'entité d'activation/désactivation 22. Ce dernier est noté (CertDPED)_{CertEnD};
- CertDel est le certificat associé au rôle de suppression d'un profil d'accès. La clé secrète de ce certificat CertDel est utilisée pour signer le certificat CertDPD de l'entité de suppression 23. Ce dernier est noté (CertDPD)_{CertDel}.

Ainsi, le rôle attribué à une entité d'administration correspond à celui associé au certificat utilisé pour signer le certificat de cette entité d'administration. Ce rôle correspond à une autorisation d'exécuter une action d'administration. Dans le cas décrit, il s'agit d'installer un profil d'accès, d'activer ou de désactiver un profil d'accès, de supprimer d'un profil d'accès.

Dans ce deuxième mode de réalisation, le module de sécurité 10 mémorise cinq clés publiques : la clé publique GlobalCA_PK de l'autorité de certification GlobalCA, la clé publique CertMaster_PK de l'entité maître 20, la clé publique CertInstall_PK, la clé publique CertEnD_PK et la clé publique CertDel_PK . Ces clés publiques sont configurées par exemple en usine.

L'entité maître 20 a ainsi pour rôle d'attribuer les droits à chacune des entités d'administration, c'est-à-dire dans le cas décrit aux entités d'installation 21, d'activation/désactivation 22, de suppression 23. Cette attribution de droits s'effectue au moyen du certificat qui est associé à l'entité d'administration concernée.

On constate que dans ces deux modes de réalisation, le module de sécurité 10 peut vérifier que le certificat fourni par une entité d'administration porte bien une information indiquant que cette entité est autorisée à demander l'exécution d'une action d'administration relative à un profil d'accès : dans le premier mode de réalisation, en accédant directement au champ portant cette information et dans le deuxième mode de réalisation, en fonction du certificat utilisé pour signer le certificat fourni par l'entité d'administration.

Par la suite, une demande d'exécution d'une action d'administration peut correspondre aussi bien à un échange comprenant une demande d'autorisation d'exécution suivie de l'exécution en elle-même, qu'à la demande d'exécution, cette dernière comprenant implicitement une demande d'autorisation de l'exécution de l'action.

Des étapes d'un procédé d'administration d'un profil d'accès mis en œuvre par un module de sécurité selon un mode de réalisation particulier vont être décrites en relation avec la figure 2A. Des étapes du procédé d'administration d'un profil d'accès mis en œuvre par une entité d'administration sont quant à elles décrites en relation avec la **figure 2B****.** On se place par la suite à titre illustratif au niveau de l'entité d'installation 21 pour demander l'exécution d'une action de téléchargement d'un profil d'accès dans le module de sécurité 10. On rappelle que dans le mode de réalisation décrit, l'action d'administration appartient au groupe comprenant au moins un téléchargement d'un profil d'accès, une activation d'un profil d'accès, une désactivation d'un profil d'accès, une suppression d'un profil d'accès. Aucune limitation n'est attachée à cet exemple, la description étant aisément transposable à l'activation/désactivation d'un profil d'accès au niveau de l'entité d'activation/désactivation 22, à la suppression d'un profil d'accès au niveau de l'entité de suppression 23 ou bien encore à une quelconque action d'administration relative à un profil d'accès. L'exécution de ces étapes est dans un mode de réalisation particulier déclenchée par un donneur d'ordre (par exemple l'opérateur)qui émet une requête vers l'entité d'installation 21 pour télécharger un profil d'accès vers un module de sécurité en fournissant les informations nécessaires à l'identification de ce module de sécurité.

L'entité d'installation 21 (étape F1) et le module de sécurité 10 (étape E1) initialisent une procédure de téléchargement après établissement d'une session sécurisée de téléchargement comme décrit dans les spécifications de références SGP.21 et SGP.22. Cette session de téléchargement s'appuie sur une connexion sécurisée TLS (pour *« Transport Layer Security »)* et fait suite à une authentification mutuelle de l'entité d'installation 21 et du module de sécurité 10.

Dans une étape F2, l'entité d'installation 21 envoie à destination du module de sécurité 10 une demande d'exécution d'une action d'administration relative à un profil d'accès. Plus précisément dans l'exemple décrit, cette action d'administration correspond à un téléchargement d'un profil d'accès. Cette demande comprend un certificat, par exemple un certificat de clé publique, de cette entité d'installation 21. Le certificat envoyé porte une information indiquant que l'entité d'installation est autorisée à demander l'exécution de l'action de téléchargement. Dans le premier mode de réalisation, ce certificat (CertDPI)_{CertMaster} comprend un champ indiquant une autorisation pour l'exécution de l'action de téléchargement. Dans le deuxième mode de réalisation, ce certificat (CertDPI)_{CertInstall} est signé par une clé secrète d'un certificat spécifique pour le rôle de téléchargement CertInstall.

Le module de sécurité 10 reçoit dans une étape E2 la demande d'exécution d'une action d'administration relative à un profil d'accès en provenance de l'entité d'installation 21, cette demande comprenant un certificat, par exemple un certificat de clé publique.

Dans une étape E3, le module de sécurité 10 vérifie que le certificat reçu est légitime, plus précisément le module de sécurité 10 vérifie la validité du certificat fourni par l'entité d'installation 21 au moyen de la clé publique CertDPI_PK correspondante installée dans le module de sécurité 10. Si ce n'est pas le cas, le module de sécurité 10 n'autorise pas la demande d'exécution en envoyant un rejet de la demande et interrompt la procédure de téléchargement.

S'il est vérifié que le certificat reçu est légitime, dans une étape E4, le module de sécurité 10 vérifie que le certificat reçu porte une information indiquant que cette entité 21 est autorisée à demander l'exécution d'une action de téléchargement. Dans le premier mode de réalisation, il s'agit de vérifier que ce certificat (CertDPI)_{CertMaster} comprend un champ indiquant une autorisation pour l'exécution de l'action de téléchargement. Dans le deuxième mode de réalisation, il s'agit de vérifier que ce certificat (CertDPI)_{CertInstall} est signé par une clé secrète d'un certificat spécifique pour le rôle de téléchargement. Pour effectuer cette vérification, le module de sécurité 10 mémorise la clé publique CertInstall_PK du certificat spécifique pour le rôle de téléchargement. Si le module de sécurité 10 détermine que le certificat reçu ne porte pas une information indiquant que cette entité 21 est autorisée à demander l'exécution d'une action de téléchargement, le module de sécurité 10 n'autorise pas la demande d'exécution en envoyant un rejet de la demande et interrompt la procédure de téléchargement.

Si le module de sécurité 10 vérifie que le certificat reçu porte une information indiquant que cette entité 21 est autorisée à demander l'exécution d'une action de téléchargement, dans une étape E5, le module de sécurité 10 envoie une autorisation pour exécuter l'action de téléchargement en coopération avec l'entité d'installation 21 (reçue à l'étape F3). La procédure d'exécution de l'action, c'est-à-dire de téléchargement, se poursuit comme décrit dans les spécifications techniques SGP.21 et SGP.22.

On constate que du fait de l'évolution d'architecture proposée, il est possible d'administrer des modules de sécurité aussi bien pour des services M2M que pour le B2C. Le module de sécurité interagit avec les entités d'administration selon une même technique. Par l'attribution de rôles aux entités d'administration, les deux architectures M2M et B2C convergent vers une unique architecture. En particulier, le fournisseur de service M2M obtient une flexibilité pour choisir un prestataire à qui il délègue la mise en œuvre d'actions d'administration d'un profil d'accès.

La **figure 4A** illustre de manière schématique un module de sécurité 10 dans un mode de réalisation particulier. Le module de sécurité 10 comprend notamment :
- un processeur matériel 101 pour exécuter des instructions de code de modules logiciels ;
- une zone mémoire 103, configurée pour mémoriser un programme qui comprend des instructions de code pour mettre en œuvre des étapes du procédé d'administration d'un profil d'accès;
- une mémoire de stockage 104, configurée pour stocker des données utilisées lors de la mise en œuvre du procédé d'administration d'un profil d'accès, telles que des paramètres utilisés pour des calculs effectués par le processeur 101, des données intermédiaires de calculs effectués par le processeur 101, etc ;
- une interface de réseau 102 ;
- un sous-module de gestion de profil 105, agencé pour télécharger et installer un profil d'accès et pour l'héberger dans un conteneur sécurisé. Ce module correspond à un module ISD-P *(« Issuer Security Domain Profile »)* défini par la GSMA ;
- un sous-module de contrôle de sécurité 106. Ce module correspond à un module ECASD (pour *« Embedded UICC Controlling Authority Security Domain »)* défini par la GSMA ;
qui sont connectés entre eux au travers d'un bus 100.

Bien entendu, les éléments constitutifs du module de sécurité 10 peuvent être connectés au moyen d'une connexion autre qu'un bus.

Il est ici souligné que le module de sécurité 10 comprend également d'autres sous-modules de traitement, non représentés sur la figure 4A, agencés pour mettre en œuvre les différentes fonctions de module de sécurité.

Le processeur 101 commande les opérations du module de sécurité. La zone mémoire 103 stocke au moins un code de programme d'ordinateur qui lorsqu'il est exécuté par le processeur 101 met en œuvre les différentes fonctions du module de sécurité. Le processeur 101 peut être formé par tout matériel ou logiciel connu et approprié, ou par une combinaison de matériel et de logiciel. Par exemple, le processeur 101 peut être formé par un matériel dédié tel qu'un circuit de traitement, ou par une unité de traitement programmable telle qu'une unité centrale de traitement *(Central Processing Unit)* qui exécute un programme stocké dans une mémoire de celui-ci.

La zone mémoire 103 peut être formée par n'importe quel moyen approprié capable de stocker le programme d'une manière lisible par un ordinateur. Des exemples de zone mémoire 103 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture. Le programme amène le processeur 101 à exécuter un procédé d'administration d'un profil d'accès selon un mode de réalisation particulier.

Une interface réseau 102 fournit une connexion entre le module de sécurité et une entité d'administration par l'intermédiaire d'un réseau de communication s'appuyant sur un réseau d'accès sous-jacent.

Le sous-module de contrôle de sécurité 106 est agencé pour mémoriser de manière sécurisée des données d'authentification et pour fournir les services suivants au sous-module de gestion de profil 105, signer des données qui lui sont fournies au moyen de sa clé secrète CerteUICC_SK et vérifier des certificats à la demande de ce sous-module avec une clé publique de l'autorité de certification GlobalCA_PK ou de l'entité maître CertMaster_PK.

Les données d'authentification mémorisées dans le sous-module de contrôle de sécurité 106 sont notamment les suivantes :
- la clé privée du module de sécurité CerteUICC_SK, le certificat de clé publique du module de sécurité CerteUICC, comprenant la clé publique CerteUICC_PK ;
- la clé publique de l'autorité de certification GlobalCA_PK ou de l'entité maître CertMaster_PK. Dans le deuxième mode de réalisation le sous-module de contrôle de sécurité 106 comprend également la clé publique CertInstall_PK, la clé publique CertEnD_PK et la clé publique CertDel_PK.

Le sous-module de contrôle de sécurité 106 est en particulier agencé pour vérifier qu'un certificat reçu en provenance d'une entité d'administration demandant l'exécution d'une action relative à un profil d'accès est légitime et que ce certificat porte une information indiquant que cette entité est autorisée à demander l'exécution de cette action.

La **figure 4B** illustre de manière schématique une entité d'administration 20, 21, 22, 23 dans un mode de réalisation particulier. L'entité d'administration 20 comprend notamment :
- un processeur matériel 201 pour exécuter des instructions de code de modules logiciels ;
- une zone mémoire 203, configurée pour mémoriser un programme qui comprend des instructions de code pour mettre en œuvre des étapes du procédé d'administration d'un profil d'accès ;
- une mémoire de stockage 204, configurée pour stocker des données utilisées lors de la mise en œuvre du procédé d'administration d'un profil d'accès, telles que des paramètres utilisés pour des calculs effectués par le processeur 201, des données intermédiaires de calculs effectués par le processeur 201, etc ;
- une interface de réseau 202 ;
- un module de contrôle 205 :
   qui sont connectés entre eux au travers d'un bus 200.

Bien entendu, les éléments constitutifs de l'entité d'administration peuvent être connectés au moyen d'une connexion autre qu'un bus.

Il est ici souligné que l'entité d'administration comprend également d'autres modules de traitement, non représentés sur la figure 4B, agencés pour mettre en œuvre les différentes fonctions d'entité d'administration.

Le processeur 201 commande les opérations de l'entité d'administration. La zone mémoire 203 stocke au moins un code de programme d'ordinateur qui lorsqu'il est exécuté par le processeur 201 met en œuvre les différentes fonctions de l'entité d'administration. Le processeur 201 peut être formé par tout matériel ou logiciel connu et approprié, ou par une combinaison de matériel et de logiciel. Par exemple, le processeur 201 peut être formé par un matériel dédié tel qu'un circuit de traitement, ou par une unité de traitement programmable telle qu'une unité centrale de traitement qui exécute un programme stocké dans une mémoire de celui-ci.

La zone mémoire 203 peut être formée par n'importe quel moyen approprié capable de stocker le programme d'une manière lisible par un ordinateur. Des exemples de zone mémoire 203 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture. Le programme amène le processeur 201 à exécuter un procédé d'administration d'un profil d'accès selon un mode de réalisation particulier.

Une interface réseau 202 fournit une connexion entre l'entité d'administration et un module de sécurité par l'intermédiaire d'un réseau de communication s'appuyant sur un réseau d'accès sous-jacent.

Pour l'entité maître 20, le module de contrôle 205 est en particulier agencé pour signer un certificat de clé publique d'une entité d'administration, ce certificat portant une information indiquant que cette entité est autorisée à demander **l'exécution** d'une action d'administration relative à un profil d'accès.

Les autres entités d'administration 21, 22, 23 sont de structure similaire à celle décrite précédemment en relation avec l'entité d'administration 20. Pour celles-ci, le module de contrôle 205 est alors agencé pour envoyer à destination d'un module de sécurité une demande d'exécution d'une action d'administration relative à un profil d'accès, cette demande comprenant un certificat de cette entité, ce certificat portant une information indiquant que ladite entité est autorisée à demander l'exécution de ladite action et pour recevoir une autorisation pour exécuter l'action en coopération avec le module de sécurité, lorsqu'il est vérifié par le module de sécurité que le certificat est légitime et qu'il porte cette information.

La technique d'administration d'un profil d'accès est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 105 et 106 sont configurés pour mettre en œuvre des étapes du procédé d'administration d'un profil d'accès, mises en œuvre par un module de sécurité. Il s'agit de préférence de modules logiciels comprenant des instructions logicielles pour faire exécuter les étapes (ou des actions) du procédé d'administration d'un profil d'accès précédemment décrit, mises en œuvre par un module de sécurité. L'invention concerne donc aussi :
- un programme pour un module de sécurité, comprenant des instructions de code de programme destinées à commander l'exécution des étapes (ou des actions) du procédé d'administration d'un profil d'accès précédemment décrit, lorsque ledit programme est exécuté par ce module de sécurité ;
- un support d'enregistrement lisible par un module de sécurité sur lequel est enregistré le programme pour un module de sécurité.

Dans un mode de réalisation particulier, le module 205 est configuré pour mettre en œuvre des étapes du procédé d'administration d'un profil d'accès, mises en œuvre par une entité d'administration. Il s'agit de préférence de modules logiciels comprenant des instructions logicielles pour faire exécuter les étapes (ou des actions) du procédé d'administration précédemment décrit, mises en œuvre par une entité d'administration. L'invention concerne donc aussi :
- un programme pour une entité d'administration, comprenant des instructions de code de programme destinées à commander l'exécution des étapes (ou des actions) du procédé d'administration d'un profil d'accès précédemment décrit, lorsque ledit programme est exécuté par cette entité d'administration ;
- un support d'enregistrement lisible par une entité d'administration sur lequel est enregistré le programme pour une telle entité.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne donc aussi un module de sécurité configuré pour mémoriser un profil d'accès à un réseau de communication, comprenant un processeur configuré pour :
- recevoir une demande d'exécution d'une action d'administration relative à un profil d'accès en provenance d'une entité d'administration, ladite demande comprenant un certificat de ladite entité ;
- envoyer une autorisation pour exécuter cette action en coopération avec l'entité d'administration lorsqu'il est vérifié que le certificat reçu est légitime et qu'il porte une information indiquant que ladite entité est autorisée à demander l'exécution de ladite action ;
- envoyer un rejet de la demande d'exécution dans le cas contraire.

L'invention concerne donc aussi une entité d'administration, configurée pour administrer un profil d'accès à un réseau de communication, ledit procédé comprenant :
- envoyer à destination d'un module de sécurité une demande d'exécution d'une action d'administration relative à un profil d'accès, ladite demande comprenant un certificat de ladite entité, ledit certificat portant une information indiquant que ladite entité est autorisée à demander l'exécution de ladite action ;
- recevoir une autorisation pour exécuter l'action en coopération avec le module de sécurité, lorsqu'il est vérifié par le module de sécurité que le certificat est légitime et qu'il porte ladite information.

## Revendications

1. Procédé d'administration d'un profil d'accès à un réseau de communication par un module de sécurité (10), ledit procédé comprenant :
- réception (E2) d'une demande d'exécution d'une action d'administration relative à un profil d'accès en provenance d'une entité d'administration (21, 22, 23), ladite demande comprenant un certificat de ladite entité, ledit certificat étant signé par une clé secrète d'une entité maître pour attribuer un rôle à l'entité d'administration, le rôle correspondant à une autorisation d'exécuter ladite action d'administration ;
- envoi d'une autorisation (E5) à l'entité d'administration pour exécuter l'action en coopération avec l'entité d'administration lorsqu'il est vérifié que le certificat reçu est légitime et qu'il porte une information indiquant que le rôle attribué à l'entité d'administration correspond à l'autorisation d'exécution de ladite action d'administration ;
- envoi d'un rejet de la demande d'exécution à l'entité d'administration dans le cas contraire.

2. Procédé d'administration d'un profil d'accès à un réseau de communication par une entité d'administration (21, 22, 23), ledit procédé comprenant :
- envoi (F2) à destination d'un module de sécurité (10) d'une demande d'exécution d'une action d'administration relative à un profil d'accès, ladite demande comprenant un certificat de ladite entité, ledit certificat portant une information indiquant un rôle attribué à l'entité d'administration, le certificat étant signé par une clé secrète d'une entité maître pour attribuer le rôle à l'entité d'administration, le rôle correspondant à une autorisation d'exécuter l'action administrative ;
- réception (F3) depuis le module de sécurité d'une autorisation pour exécuter l'action en coopération avec le module de sécurité, lorsqu'il est vérifié par le module de sécurité que le certificat est légitime et qu'il porte ladite information.

3. Procédé selon l'une des revendications précédentes, dans lequel le certificat comprend un champ indiquant le rôle attribué à l'entité d'administration.

4. Procédé selon l'une des revendications 1 ou 2, dans lequel la clé secrète de l'entité maître avec laquelle le certificat est signé, est une clé secrète d'un certificat associé à ladite action indiquant une autorisation pour l'exécution de ladite action.

5. Procédé selon l'une des revendications 1 ou 2, dans lequel ladite action appartient au groupe comprenant au moins un téléchargement d'un profil d'accès, une activation d'un profil d'accès, une désactivation d'un profil d'accès, une suppression d'un profil d'accès.

6. Module de sécurité (10), configuré pour mémoriser un profil d'accès à un réseau de communication, ledit module comprenant :
- un module de gestion de profil (105), configuré pour recevoir une demande d'exécution d'une action d'administration relative à un profil d'accès en provenance d'une entité d'administration (21, 22, 23), ladite demande comprenant un certificat de ladite entité d'administration, le certificat étant signé par une clé secrète d'une entité maître pour attribuer un rôle à l'entité d'administration, le rôle correspondant à une autorisation d'exécuter l'action d'administration, et pour autoriser l'exécution de l'action en coopération avec l'entité d'administration lorsqu'il est vérifié que le certificat reçu est légitime et qu'il porte une information indiquant que le rôle attribué à l'entité d'administration correspond à l'autorisation d'exécuter l'action d'administration et pour rejeter la demande dans le cas contraire.

7. Entité d'administration (21-23) d'un profil d'accès à un réseau de communication, ladite entité comprenant un module de contrôle (205) configuré pour envoyer à destination d'un module de sécurité (10) une demande d'exécution d'une action d'administration relative à un profil d'accès, ladite demande comprenant un certificat de ladite entité, ledit certificat portant une information indiquant un rôle attribué à l'entité d'administration, ledit certificat étant signé par une clé secrète d'une entité maître pour attribuer le rôle à l'entité d'administration, le rôle correspondant à une autorisation d'exécuter ladite action d'administration, et pour recevoir une autorisation pour exécuter l'action en coopération avec le module de sécurité, lorsqu'il est vérifié par le module de sécurité que le certificat est légitime et qu'il porte ladite information.

8. Système d'administration (1) d'un profil d'accès à un réseau de communication, ledit système comprenant une entité d'administration selon la revendication 7 et une entité maître (20), configurée pour signer un certificat de l'entité d'administration par une clé secrète pour attribuer un rôle à l'entité d'administration, le rôle correspondant à une autorisation d'exécuter ladite action d'administration, ledit certificat portant une information indiquant le rôle attribué à l'entité d'administration.

9. Programme pour un module de sécurité, comprenant des instructions de code de programme destinées à commander l'exécution des étapes du procédé d'administration d'un profil d'accès selon l'une des revendications 1 ou 3 à 5 mises en œuvre par un module de sécurité, lorsque ledit programme est exécuté par ledit module de sécurité.

10. Support d'enregistrement lisible par un module de sécurité sur lequel est enregistré le programme selon la revendication 9.

11. Programme pour une entité d'administration, comprenant des instructions de code de programme destinées à commander l'exécution des étapes du procédé d'administration d'un profil d'accès selon l'une des revendications 2 à 5 mises en œuvre par une entité d'administration, lorsque ledit programme est exécuté par ladite entité.

12. Support d'enregistrement lisible par une entité d'administration sur lequel est enregistré le programme selon la revendication 11.

## Patentansprüche

1. Verfahren zur Verwaltung eines Zugangsprofils zu einem Kommunikationsnetzwerk durch ein Sicherheitsmodul (10), wobei das Verfahren Folgendes aufweist:
- Empfangen (E2) einer Anforderung zur Ausführung einer Verwaltungsaktion in Bezug auf ein Zugangsprofil von einer Verwaltungseinheit (21, 22, 23), wobei die Anforderung ein Zertifikat der Einheit enthält, wobei das Zertifikat durch einen geheimen Schlüssel einer Master-Einheit signiert ist, um der Verwaltungseinheit eine Rolle zuzuweisen, wobei die Rolle einer Berechtigung zur Ausführung der Verwaltungsaktion entspricht;
- Senden einer Berechtigung (E5) an die Verwaltungseinheit zur Ausführung der Aktion in Zusammenarbeit mit der Verwaltungseinheit, wenn geprüft wird, ob das empfangene Zertifikat echt ist und Informationen enthält, aus denen hervorgeht, dass die der Verwaltungseinheit zugewiesene Rolle der Berechtigung zur Ausführung der Verwaltungsaktion entspricht;
- Senden einer Ablehnung der Ausführungsanforderung an die Verwaltungseinheit, falls nicht.

2. Verfahren zur Verwaltung eines Zugangsprofils zu einem Kommunikationsnetzwerk durch eine Verwaltungseinheit (21, 22, 23), wobei das Verfahren Folgendes aufweist:
- Senden (F2) einer Anforderung zum Ausführen einer Verwaltungsaktion in Bezug auf ein Zugangsprofil an ein Sicherheitsmodul (10), wobei die Anforderung ein Zertifikat der Einheit enthält, das Informationen über eine der Verwaltungseinheit zugewiesene Rolle enthält, wobei das Zertifikat durch einen geheimen Schlüssel einer Master-Einheit signiert ist, um der Verwaltungseinheit eine Rolle zuzuweisen, wobei die Rolle einer Berechtigung zur Ausführung der Verwaltungsaktion entspricht;
- Empfangen (F3) einer Berechtigung zur Ausführung der Aktion in Zusammenarbeit mit dem Sicherheitsmodul vom Sicherheitsmodul, wenn vom Sicherheitsmodul geprüft wird, ob das Zertifikat echt ist und diese Informationen enthält.

3. Verfahren nach einem der vorhergehenden Ansprüche, wobei das Zertifikat ein Feld aufweist, das die der Verwaltungseinheit zugewiesene Rolle angibt.

4. Verfahren nach einem der Ansprüche 1 oder 2, wobei der geheime Schlüssel der Master-Einheit, mit der das Zertifikat signiert ist, ein geheimer Schlüssel eines Zertifikats ist, das mit der Aktion assoziiert ist und eine Berechtigung zur Ausführung der Aktion angibt.

5. Verfahren nach einem der Ansprüche 1 oder 2, wobei die Aktion zu der Gruppe gehört, die mindestens ein Herunterladen eines Zugangsprofils, eine Aktivierung eines Zugangsprofils, eine Deaktivierung eines Zugangsprofils, eine Löschung eines Zugangsprofils aufweist.

6. Sicherheitsmodul (10), das dazu ausgelegt ist, ein Zugangsprofil zu einem Kommunikationsnetzwerk zu speichern, wobei das Modul Folgendes aufweist:
- Profilverwaltungsmodul (105), das dazu ausgelegt ist, eine Anforderung zur Ausführung einer Verwaltungsaktion in Bezug auf ein Zugangsprofil von einer Verwaltungseinheit (21, 22, 23) zu empfangen, wobei die Anforderung ein Zertifikat der Verwaltungseinheit enthält, wobei das Zertifikat durch einen geheimen Schlüssel einer Master-Einheit signiert ist, um der Verwaltungseinheit eine Rolle zuzuweisen, wobei die Rolle einer Berechtigung zur Ausführung der Verwaltungsaktion entspricht, und die Ausführung der Aktion in Zusammenarbeit mit der Verwaltungseinheit zu genehmigen, wenn geprüft wird, ob das empfangene Zertifikat echt ist und Informationen enthält, aus denen hervorgeht, dass die der Verwaltungseinheit zugewiesene Rolle der Berechtigung zur Ausführung der Verwaltungsaktion entspricht, und um die Ausführung abzulehnen, wenn nicht.

7. Einheit zur Verwaltung (21-23) eines Zugangsprofils zu einem Kommunikationsnetzwerk, wobei die Einheit ein Steuerungsmodul (205) aufweist, das dazu ausgelegt ist, an ein Sicherheitsmodul (10) eine Anforderung zum Ausführen einer Verwaltungsaktion in Bezug auf ein Zugangsprofil zu senden, wobei die Anforderung ein Zertifikat der Einheit enthält, das Informationen über eine der Verwaltungseinheit zugewiesene Rolle enthält, wobei das Zertifikat durch einen geheimen Schlüssel einer Master-Einheit signiert ist, um der Verwaltungseinheit eine Rolle zuzuweisen, wobei die Rolle einer Berechtigung zur Ausführung der Verwaltungsaktion entspricht, und eine Berechtigung zur Ausführung der Aktion in Zusammenarbeit mit dem Sicherheitsmodul zu erhalten, wenn vom Sicherheitsmodul geprüft wird, ob das Zertifikat echt ist und diese Informationen enthält.

8. System (1) zur Verwaltung eines Zugangsprofils zu einem Kommunikationsnetzwerk, wobei das System eine Verwaltungseinheit nach Anspruch 7 und eine Master-Einheit (20) aufweist, die dazu ausgelegt ist, ein Zertifikat der Verwaltungseinheit mit einem geheimen Schlüssel zu signieren, um der Verwaltungseinheit eine Rolle zuzuweisen, wobei die Rolle einer Berechtigung zur Ausführung der Verwaltungsaktion entspricht, wobei das Zertifikat Informationen über eine der Verwaltungseinheit zugewiesene Rolle enthält.

9. Programm für ein Sicherheitsmodul, das Programmcodeanweisungen aufweist, die dazu bestimmt sind, die Ausführung der Schritte des Verfahrens zur Verwaltung eines Zugangsprofils nach einem der Ansprüche 1 oder 3 bis 5 zu steuern, die von einem Sicherheitsmodul implementiert werden, wenn das Programm von dem Sicherheitsmodul ausgeführt wird.

10. Von einem Sicherheitsmodul lesbares Aufzeichnungsmedium, auf dem das Programm nach Anspruch 9 aufgezeichnet ist.

11. Programm für eine Verwaltungseinheit, das Programmcodeanweisungen aufweist, die dazu bestimmt sind, die Ausführung der Schritte des Verfahrens zur Verwaltung eines Zugangsprofils nach einem der Ansprüche 2 bis 5 zu steuern, die von einer Verwaltungseinheit implementiert werden, wenn das Programm von der Einheit ausgeführt wird.

12. Von einer Verwaltungseinheit lesbares Aufzeichnungsmedium, auf dem das Programm nach Anspruch 11 aufgezeichnet ist.

## Claims

1. Method of administration of a profile for access to a communication network by a security module (10), said method comprising:
- receiving (E2) a request to execute an administrative action relating to an access profile from an administrative entity (21, 22, 23), said request comprising a certificate of said entity, said certificate being signed by a secret key of a master entity with a view to assigning a role to the administrative entity, the role corresponding to an authorization to execute said administrative action;
- sending, to the administrative entity, an authorization (E5) to execute the action in cooperation with the administrative entity when it is verified that the received certificate is legitimate and that it contains information indicating that the role assigned to the administrative entity corresponds to the authorization to execute said administrative action;
- sending a rejection of the execute request to the administrative entity in the contrary case.

2. Method of administration of a profile for access to a communication network by an administrative entity (21, 22, 23), said method comprising:
- sending (F2) to a security module (10) a request to execute an administrative action relating to an access profile, said request comprising a certificate of said entity, said certificate containing information indicating a role assigned to the administrative entity, the certificate being signed by a secret key of a master entity with a view to assigning the role to the administrative entity, the role corresponding to an authorization to execute the administrative action;
- receiving (F3) from the security module an authorization to execute the action in cooperation with the security module, when it is verified by the security module that the certificate is legitimate and that it contains said information.

3. Method according to one of the preceding claims, wherein the certificate comprises a field indicating the role assigned to the administrative entity.

4. Method according to either of Claims 1 and 2, wherein the secret key of the master entity with which the certificate is signed is a secret key of a certificate associated with said action indicating an authorization to execute said action.

5. Method according to either of Claims 1 and 2, wherein said action belongs to the group comprising at least downloading an access profile, enabling an access profile, disabling an access profile, and deleting an access profile.

6. Security module (10), configured to store in memory a communication-network access profile, said module comprising:
- a profile-managing module (105), configured to receive a request to execute an administrative action relating to an access profile from an administrative entity (21, 22, 23), said request comprising a certificate of said administrative entity, the certificate being signed by a secret key of a master entity with a view to assigning a role to the administrative entity, the role corresponding to an authorization to execute the administrative action, and to authorize the execution of the action in cooperation with the administrative entity when it is verified that the certificate received is legitimate and that it contains information indicating that the role assigned to the administrative entity corresponds to the authorization to execute the administrative action, and to reject the request in the contrary case.

7. Administrative entity (21-23) for administering a communication-network access profile, said entity comprising a control module (205) configured to send, to a security module (10), a request to execute an administrative action relating to an access profile, said request comprising a certificate of said entity, said certificate containing information indicating a role assigned to the administrative entity, said certificate being signed by a secret key of a master entity with a view to assigning the role to the administrative entity, the role corresponding to an authorization to execute said administrative action, and to receive an authorization to execute the action in cooperation with the security module, when it is verified by the security module that the certificate is legitimate and that it contains said information.

8. Administrative system (1) for administering a profile for access to a communication network, said system comprising an administrative entity according to Claim 7 and a master entity (20) that is configured to sign a certificate of the administrative entity with a secret key with a view to assigning a role to the administrative entity, the role corresponding to an authorization to execute said administrative action, said certificate containing information indicating the role assigned to the administrative entity.

9. Program for a security module, comprising program-code instructions intended to command the execution of the steps of the method of administration of an access profile according to one of Claims 1 or 3 to 5, said steps being implemented by a security module, when said program is executed by said security module.

10. Storage medium readable by a security module, on which medium the program according to Claim 9 is stored.

11. Program for an administrative entity, comprising program-code instructions intended to command the execution of the steps of the method of administration of an access profile according to one of Claims 2 to 5, said steps being implemented by an administrative entity, when said program is executed by said entity.

12. Storage medium readable by an administrative entity, on which medium the program according to Claim 11 is stored.
